# EUROPÄISCHE PATENTSCHRIFT

(11) **EP 0 504 861 B1**
(45) Veröffentlichungstag und Bekanntmachung des Hinweises auf die Patenterteilung: **30.11.1994**
(21) Anmeldenummer: 92104724.7
(22) Anmeldetag: 18.03.1992
(51) Int. Cl.: B23H 7/06, B23H 7/20

(54) **Verfahren zum Anschneiden eines Werkstücks beim funkenerosiven Schneiden**
Method of varying wire-electroerosion cutting parameters when cutting into the workpiece
Procédé pour varier les paramètres de coupage d'une machine d'électroérosion à fil pendant l'entamage de la pièce

(30) Priorität: 20.03.1991 DE 4109139
(43) Veröffentlichungstag der Anmeldung: 23.09.1992
(73) Patentinhaber: AG für industrielle Elektronik AGIE Losone bei Locarno, CH-6616 Losone/Locarno (CH)
(72) Erfinder: Masicovetere, Roland, CH-6616 Losone (CH); Erba, Mauro, CH-6616 Locarno (CH); Paganetti, Ivano, CH-6575 San-Nazzaro (CH); Mazzolini, Livio, CH-6946 Ponte Capriasca (CH); d'Amario, Rino, I-6807 Taverne (IT)
(74) Vertreter: Turi, Michael, Dipl.-Phys.

(56) Entgegenhaltungen:
- EP-A- 0 023 824
- EP-A- 0 378 280
- EP-A- 0 383 370

## Beschreibung

Die Erfindung betrifft ein Verfahren zum Anschneiden eines Werkstücks beim funkenerosiven Schneiden mittels einer Drahtelektrode, bei dem wenigstens ein Teil der Werte für die spezifischen Schneidparameter längs einer Einfahrstrecke im Werkstück gegenüber den Werten der Schneidparameter für die eigentliche Schneidkontur so reduziert sind, dass ein Drahtbruch vermieden wird.

Beim Anschneiden eines Werkstücks mit Hilfe einer Drahtelektrode herrschen zunächst keine optimalen Schneidbedingungen.

Grund hierfür ist, daß die Drahtelektrode am Anfang eines zu schneidenden Spaltes noch keine ausreichend stabilen Verhältnisse vorfindet, vorallem wenn nicht im Bad gearbeitet wird. Zusätzlich ist der Spalt um die Drahtelektrode noch nicht symmetrisch, derart, daß die Drahtelektrode leistungsmäßig belastet werden könnte, als befände sie sich im Zustand des Vollschnittes. Diese, sowie weitere Phänomene speziell beim Anschnitt eines Werkstücks sind bekannt. Sie führen zu einer sehr hohen Wahrscheinlichkeit für einen Drahtriß.

Um zu vermeiden, daß die Drahtelektrode nicht schon beim Anschnitt reißt, wurden bislang im Stand der Technik zwei Maßnahmen vorgeschlagen, um diesem Problem entgegenzuwirken. Beide Maßnahmen gehen davon aus, die Drahtelektroden nach Anschneiden des Werkstückes zunächst längs einer sogenannten Einfahrstrecke mit reduzierten Leistungswerten zu führen. An diese Einfahrstrecke schließt sich dann die eigentliche Schneidkontur an. Ab hier wird die Drahtelektrode bei voller Leistung bewegt.

Bei den beiden zuvor erwähnten Maßnahmen wurde während der Bewegung der Drahtelektrode längs der Einfahrstrecke auf Werte für die Schneidparameter folgendermaßen eingewirkt:
1. Die Spül- und Leistungsparamter waren während der Einfahrstrecke auf etwa 40 % reduziert. Dies hat zwar den Vorteil, daß die Wahrscheinlichkeit eines Drahtrisses aufgrund der geringeren Beanspruchung der Drahtelektrode reduziert wird. Gleichzeitig jedoch ist diese Art der Bewegung bei wesentlich geringerer, konstanter Leistung als im Vollschnitt längs der Einfahrstrecke sehr zeitaufwendig. Reduzierte Spül- und Leistungsparameter haben nämlich eine geringere Fortbewegungsgeschwindigkeit des Drahtes zur Folge, da bei geringerer Leistung ein geringerer Abtrag im Werkstück als bei höherer Leistung erfolgt. Diese geringere Geschwindigkeit wird hier entlang der gesamten Einfahrstrecke in Kauf genommen, obgleich sich die Verhältnisse für den Draht schon wesentlich stabilisiert haben und höhere Werte für die Spül- und Leistungsparameter möglich wären.
   Am Ende der Einfahrstrecke werden schließlich die Werte für die Spül- und Leistungsparameter um etwa 60 % erhöht, um den Vollschnitt vorzunehmen. Diese sprunghafte Erhöhung der Werte führt zu einer starken Kurzzeitbelastung der Drahtelektrode und erhöht gleichzeitig die Wahrscheinlichkeit für einen Riß der Drahtelektrode wesentlich.
2. Die Einfahrstrecke wird in Teilstrecken unterteilt. Dabei werden die Werte der zuvor erwähnten Schneidparameter jeweils stufenartig erhöht. Obgleich die Leistungsstufen selbstverständlich geringer sind als bei der zuvor erwähnten ersten Maßnahme, wirken zum Zeitpunkt der stufenförmigen Belastung dennoch zu starke Kräfte auf die Drahtelektrode. Diese zweite Maßnahme hat zudem den Nachteil, daß ein erhöhter Programmieraufwand erforderlich ist. Gleichzeitig ist die Maßnahme allgemein anwendbar, d. h., es müssen je nach Einfahrlängen und verwendeter Technologie die Schneidparameter neu definiert werden.

Ziel der Erfindung ist es, die Gefahr von Drahtrissen in der Anschneidphase zu reduzieren.

Dieses Ziel wird bei einem gattungsgemäßen Verfahren dadurch erreicht, daß zumindest ein Teil der reduzierten Schneidparameter stetig geändert wird, bis die für die eigentliche Schneidkontur vorgesehenen Werte erreicht sind. Auf diese Weise kann eine sprunghafte Änderung der Werte für die Schneidparameter vermieden werden. Der Draht wird längs der Einfahrstrecke nicht unregelmäßig oder kurzzeitig übermäßig stark belastet.

Bei einer besonders vorteilhaften Ausführungsform des erfindungsgemäßen Verfahrens werden die Werte der Schneidparameter für die eigentliche Schneidkontur als Endpunkte für die stetige Änderung und der Weg für diese Änderung zu Beginn des Anschneidens bestimmt (Anspruch 2). Ab Erreichen der Endpunkte soll der Konturschnitt unter bestmöglichen Leistungs- und Spülbedingungen vorgenommen werden. Um den stetigen Übergang ohne sprunghafte Änderung der Werte für die Schneidparameter zu vervollständigen, werden die Werte der Schneidparameter derart stetig geändert, daß schließlich auch ein stetiger Übergang in die Schneidkonturwerte vorliegt. Die Wahrscheinlichkeit für einen Drahtriß wird durch einen derart glatten Werteübergang auf ein Minimum reduziert.

Gleichzeitig wird zu Beginn des Anschneidens die Länge des Weges festgelegt, die für den Einfahrvorgang nötig ist. Diese Länge ist von mehreren Randbedingungen abhängig. Beispielsweise beeinflußt die Höhe des Werkstückes insofern die Länge, als sich die Spülung bei höheren Werkstücken gegenüber niedrigeren Werkstücken erst später stabilisiert. Zusätzlich sind die Drahtführungen bei höheren Werkstücken gegenüber niedrigeren Werkstücken weiter voneinander entfernt. Demzufolge schwingt der Draht bei höheren Werkstücken mehr und seine Stabilisierung wird demzufolge einen längeren Zeitraum erforderlich machen als bei niedereren Werkstücken. Bei höheren Werkstücken ist daher ein längerer Einfahrweg nötig, als bei niedereren. Bei der Bestimmung der Länge der Einfahrstrecke muß ebenfalls berücksichtigt werden, ob der Erosionsvorgang im Bad oder ohne Bad stattfindet, wie hoch der Spüldruck ist und wie der Schnittverlauf im Werkstück sein wird, d. h. ob eine nachfolgende Geometrie zu einem früheren oder erst zu einem späteren Zeitpunkt geschnitten werden muß. Auch die unterschiedlichen Technologiebedingungen sind zu beachten. Um dem Anwender die Arbeit zu erleichtern, können die für die eigentliche Schneidkontur vorgesehenen Werte der Schneidparameter sowie Werte zur Bestimmung der Einfahrstrecke gespeichert werden (Anspruch 11). Der Anwender muß dann nicht umständlich und zeitaufwendig die für ihn optimalen Werte ausfindig machen. Vielmehr greift er dann auf Werte, insbesondere für sein spezielles Werkstück zurück, die sich in der Praxis schon bestätigt haben. Ein besonders vorteilhafter Schritt in Richtung Automatisierung ist erreicht.

Besonders vorteilhaft können die zu Beginn des Anschneidens als Endpunkte bestimmten Werte der Schneidparameter während der Bewegung der Drahtelektrode längs der Einfahrstrecke wertemäßig beliebig geändert werden (Anspruch 3). Bei wesentlich verbesserten Automatisierungsbedingungen besteht für den Anwender gleichzeitig die Möglichkeit eines manuellen Eingriffs. Haben sich beispielsweise die Bedingungen im Spalt stabilisiert, bevor die Drahtelektrode die Einfahrstrecke zurückgelegt hat, so kann der Anwender durch manuellen Eingriff die Werte der Schneidparameter für die eigentliche Schneidkontur manipulieren und somit schneller erreichen. Die Gesamtbearbeitungszeit wird reduziert.

Die wertemäßig beliebige Änderung der Schneidparameter hat noch folgenden zusätzlichen Vorteil. Bevorzugt wird nämlich bei einem Riß der Drahtelektrode in der Einfahrstrecke die Drahtelektrode zunächst aus dem Werkstück bewegt und dann wieder an den Ort des Drahtelektrodenrisses zurückbewegt, um dort bei reduzierten Werten gegenüber den Werten beim Drahtriß die Resteinfahrstrecke zurückzulegen (Anspruch 10). An der Stelle eines Drahtrisses ist die Belastung auf die Drahtelektrode häufig zu groß. Bei manuellem Eingriff des Anwenders an der Stelle des Drahtrisses durch wertemäßige Änderung kann vermieden werden, daß noch einmal die gesamte Einfahrstrecke von der Drahtelektrode zurückgelegt werden muß. Die Anfangswerte für die Rest-Einfahrtstrecke ab dem Ort des Drahtrisses werden reduziert, um die für den ursprünglichen Drahtriß ausschlaggebende Belastung auf die Drahtelektrode zu mindern. Nach dem Wiederanfahren der Drahtelektrode ab der Stelle des ersten Drahtrisses können die Werte der reduzierten Schneidparameter im selben Maße stetig geändert werden, wie dies ursprünglich vor Auftreten des Drahtrisses vorgesehen war. Die Wahrscheinlichkeit, daß die Drahtelektrode nun nicht mehr reißt, wird erheblich erhöht. Selbstverständlich kann die Reduzierung der Werte für die Schneidparameter auch automatisch, ohne manuellen Eingriff des Anwenders vonstatten gehen.

Bei einer besonders vorteilhaften Ausgestaltung des erfindungsgemäßen Verfahrens werden Werte von Schneidparametern geändert, deren Änderung keine Schnittspaltänderung zur Folge hat (Anspruch 4). Ein derartiger Schneidparameter ist beispielsweise die Frequenz des Generators. Im Gegensatz zu anderen Schneidparametern führt die Erhöhung bzw. Erniedrigung der Frequenz zu einer minimalen Änderung beispielsweise der Breite des Schnittspaltes im Werkstück. Bei einer besonders bevorzugten Ausgestaltung des Verfahrens werden die Schneidparameter durch Generatorwerte, insbesondere Frequenz, Stromstärke, Spannung, Impulszeit und/oder Spülwerte, insbesondere den Spüldruck und/oder drahtspezifische Werte, insbesondere Drahtcharakteristika, Drahtgeschwindigkeit bestimmt (Anspruch 5). Die Werte dieser Schneidparameter haben den Vorteil, daß sie manuell bzw. automatisch auf einfache Weise verändert werden können. Auch ist ihre Änderung unverzüglich überprüfbar, wodurch ein Auftreten von Fehlern vermieden wird.

Besonders bevorzugt durchläuft die Drahtelektrode vor dem Anschneiden des Werkstücks eine definierte Anfahrstrecke (Anspruch 6). Unter anderem ist es damit möglich, die Drahtelektrode gegenüber dem Werkstück auszurichten, bevor der Anschnitt erfolgt. Bevorzugt erkennt der Draht den Ort, an dem er am Werkstück angelangt und beginnt ab diesem Ort damit, die Werte der reduzierten Schneidparameter in Richtung der für die eigentliche Schneidkontur vorgesehenen Werte stetig zu ändern (Anspruch 7). Bevorzugt erfolgt die Erkennung des Ortes, ab dem die Drahtelektrode das Werkstück anschneidet, insbesondere über die Spannung, den Strom, die Spülbedingungen oder optisch (Anspruch 8). Der Anschneidvorgang wird dadurch weiter automatisiert. Über die Drahtelektrode wird angezeigt, wann die stetige Änderung der Werte für die Schneidparameter längs der Einfahrstrecke beginnen kann.

Bei einer besonders bevorzugten Ausführungsform des erfindungsgemäßen Verfahrens setzt sich die stetige Änderung der Werte der reduzierten Schneidparameter bei Erreichen der Schneidkonturstrecke fort, falls die für die eigentliche Schneidkontur vorgesehenen Werte noch nicht erreicht sind (Anspruch 9). Durch Erstreckung des Weges der Einfahrtstrecke in die Schneidkontur ist daher ein Einfahren selbst dann möglich, wenn der erforderliche Weg für das Einfahren größer ist als die Einfahrstrecke.

Ausführungsbeispiele der Erfindung sind in den Zeichnungen dargestellt und werden im folgenden näher beschrieben.

Es zeigen
- Fig. 1: Eine schematische Draufsicht auf Schneidkonturen in einem Werkstück, wobei die dargestellte Änderung der Werte der Schneidparameter längs der Einfahrstrecke erfolgt;
- Fig. 2: Eine schematische Draufsicht auf Schnittkonturen in einem Werkstück, wobei die ebenfalls dargestellte Änderung der Werte der Schneidparameter bis hin in die Schneidkontur erfolgt und
- Fig. 3: Eine schematische Draufsicht auf Schneidkonturen in einem Werkstück bei einem Drahtriß sowie die Änderung der Werte der Schneidparameter ab dem Drahtriß im Vergleich zu der üblichen stetigen Änderung der Werte.

Es folgt die Erläuterung der Erfindung anhand der Zeichnungen nach Aufbau und ggf. nach Wirkungsweise der dargestellten Erfindung. Dabei werden gleiche Bezugszeichen für in den Figuren jeweils gleiche Teile und Abschnitte verwendet.

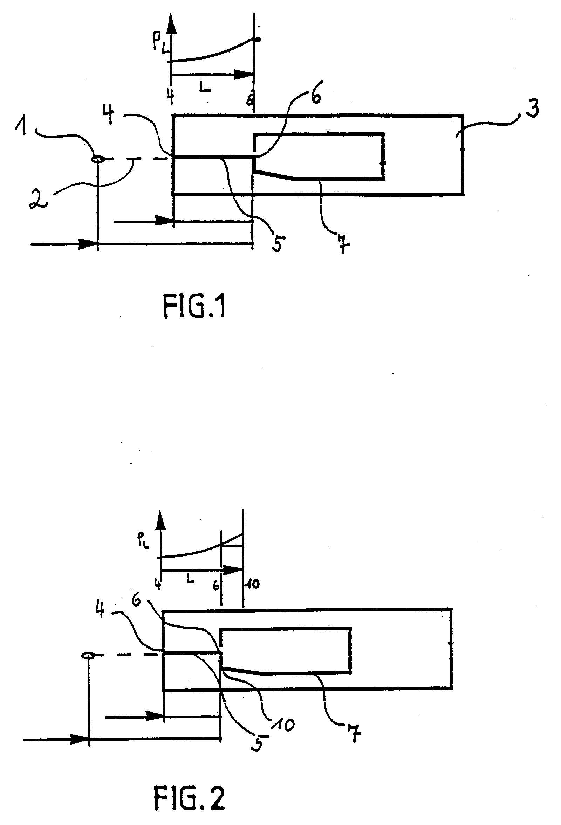

Fig. 1 zeigt einen Startpunkt 1 für eine nicht dargestellte Drahtelektrode beim funkenerosiven Bearbeiten. Die Drahtelektrode wird zunächst entlang einer Anfahrstrecke 2 auf ein Werkstück 3 zu bewegt. Mit Hilfe nicht dargestellter, jedoch bekannter Einrichtungen erkennt die Funkenerosionsmaschine wenn die Drahtelektrode am Ort des Anschnittes 4 am Werkstück 3 angelangt ist.

An diesem Ort 4 kann der Schnitt mit der Drahtelektrode noch nicht bei voller Leistung erfolgen. Grund hierfür sind, wie schon erläutert, die unsymmetrische Geometrie des Spaltes, wie aber auch Stabilisierungsprozesse der Drahtelektrode zu Beginn der Erosion. Wäre die Drahtelektrode mit voller Leistung beaufschlagt, so würde am Ort des Anschnittes 4 ein Drahtriß erfolgen. Demzufolge müssen spezifische Werte der Schneidparameter, insbesondere den Generator und die Spülung betreffend, am Ort des Anschnittes 4 wesentlich reduziert sein.

Dem Ort des Anschnittes 4 schließt sich eine Einfahrstrecke 5 an. Die Drahtelektrode wird in dieser Einfahrstrecke 5 mit verminderter Leistung längs des Schneidspalts vorwärtsbewegt. Dabei werden die für den Werkstückschnitt spezifischen Werte der Schneidparameter stetig gesteigert. Nach einer Strecke von vorzugsweise 8 mm, die in Abhängigkeit von der Werkstückhöhe und weiteren schon erörterten Randbedingungen etwas verkürzt bzw. verlängert sein kann, wird der Draht mit Werten für die Schneidparameter beaufschlagt, die etwa den Werten beim Vollschnitt im Werkstück 3 entsprechen. Die Drahtelektrode hat am Ende 6 der Einfahrstrecke 5 den Anfang der eigentlichen Schneidkontur 7 erreicht. Durch stetiges Anfahren der Werte für die Schneidparameter hin zu den vorgegebenen Endwerten beim Schneiden der Schneidkontur 7 werden Drahtrisse vermieden.

Die stetige Änderung der Leistung P_{L} des Generators und/oder der Spülung sind in Abhängigkeit von der Einfahrlänge L in einem Diagramm oberhalb der Fig. 1 dargestellt. Dabei ist erkennbar, daß der Graph für die Änderung der Werte in dem Diagramm quasi eine Rampe bildet, deren Länge L im Ausführungsbeispiel der Fig. 1 genau mit der Länge der Einfahrstrecke 5 übereinstimmt. Ist die Einfahrstrecke 5 länger als die zuvor erwähnte Rampe, d. h. der Abstand zwischen Ort des Anschnittes 4 und Ende 6 der Einfahrstrecke ist kürzer als die Länge der Rampe, so kann der Draht längs dieser Reststrecke mit konstanter Leistung P_{L} gefahren werden, bis er den Anfang der Schneidkontur 7 erreicht hat. Ab dann erfolgt die Beaufschlagung mit maximal möglicher Leistung P_{L} im Vollschnitt. Die Strecke konstanter Leistung kann sich am Anfang bzw. am Ende der Rampe anschließen.

In Fig. 2 ist hingegen der Fall dargestellt, bei dem der Weg für die Einfahrt kleiner als der Abstand zwischen dem Ort des Anschnittes 4 und dem Ende der Einfahrstrecke 6 ist. Die Einfahrstrecke 5 ist demnach kürzer als die Rampe. Wie dem Diagramm oberhalb der schematischen Aufsicht von Fig. 2 entnehmbar ist, entspricht die Leistung P_{L} am Ende 6 der Einfahrstrecke noch nicht der optimalen Leistung im Vollschnitt der Schneidkontur 7. Um diese maximale Endleistung dennoch zu erreichen, wird die Leistung der zuvor erwähnten Rampe bis in die Schneidkontur 7 hinein weiterhin stetig geändert. Der Einfahrvorgang ist somit am Ende 10 des Einfahrens nach einem vorbestimmten Weg für die Einfahrt beendet. Diesem Ende 10 schließt sich der Vollschnitt dann unter optimalen Leistungsbedingungen an.

Die stetige Zunahme der Leistung bis hinein in die Schneidkontur ist insbesondere beim sogenannten Zick-Zack-Schneiden erforderlich. Dabei handelt es sich bekanntermaßen um rechteckige Schnittkonturen, innerhalb denen der Draht schon nach Kürze mit voller Leistung beaufschlagbar ist. Aufgrund der speziellen Kontur, ist beim Zick-Zack-Schneiden schon nach kurzer Wegstrecke mit stabilen Verhältnissen innerhalb des Spaltes zu rechnen.

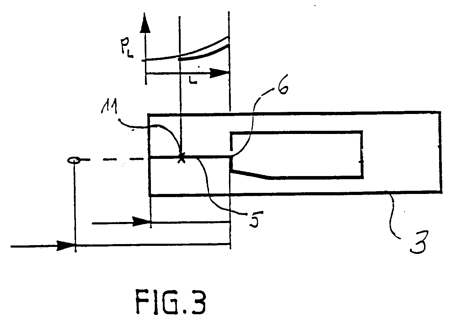

Fig. 3 schließlich zeigt den erfindungsgemäßen Einfahrvorgang bei Auftreten eines Drahtrisses an einem Ort 11 längs der Einfahrstrecke 5 im Werkstück 3. Ist der Drahtriß am Ort 11 aufgetreten, so wird die Drahtelektrode aus dem bislang geschnittenen Spalt rückwärts heraus bewegt. Die von der Drahtelektrode bis zu diesem Zeitpunkt erreichten Werte der Schneidparameter, mit denen sie auf der ursprünglichen Rampe bis zum Auftreten des Drahtrisses beaufschlagt wurde, werden gespeichert. Nach Erneuerung der Drahtelektrode wird diese an den Ort 11 des ursprünglichen Drahtrisses zurückgeführt. An diesem Ort 11 werden die gespeicherten Leistungswerte etwas reduziert, um zu vermeiden, daß aufgrund der Belastung der Drahtelektrode schon beim Anfahren ein weiterer Riß erfolgt. Die vom Ort 11 des Drahtrisses an bis zum Ende 6 der Einfahrstrecke beabsichtigte stetige Kurve der ursprünglichen Rampe wird von dem Draht insofern weiter verwendet, als in gleicher Weise die Werte der Schneidparameter entlang der restlichen Einfahrstrecke geändert werden. Im Unterschied zum Einfahrvorgang vor dem Drahtriß ist Ausgangspunkt für die restliche Rampe im Leistungsdiagramm nun jedoch ein reduzierter Wert der Schneidparameter am Ort 11 des Drahtrisses gegenüber dem ursprünglichen Wert an diesem Ort 11 zum Zeitpunkt des Drahtrisses. Die Wahrscheinlichkeit für weitere Drahtrisse wird dadurch erheblich gemindert.

Selbstverständlich kann diese Strategie beim Einfahren in ein Werkstück ebenfalls beim Anfahren, ausgehend von einer Startlochbohrung in einem Werkstück, verwendet werden. Da bei vorhandener Startlochbohrung die Verhältnisse innerhalb des Spaltes jedoch stabiler sind, ist es möglich die Länge der Rampe zu verkürzen.

## Patentansprüche

1. Verfahren zum Anschneiden eines Werkstücks (3) beim funkenerosiven Schneiden mittels einer Drahtelektrode, bei dem wenigstens ein Teil der Werte für die spezifischen Schneidparameter (P_{L}) längs einer Einfahrstrecke (5) im Werkstück (3) gegenüber den Werten der Schneidparameter (P_{L}) für die eigentliche Schneidkontur (7) so reduziert sind, dass ein Drahtbruch vermieden wird, dadurch gekennzeichnet, daß zumindest ein Teil der reduzierten Werte der Schneidparameter (P_{L}) stetig geändert wird, bis die für die eigentliche Schneidkontur (7) vorgesehenen Werte erreicht sind.

2. Verfahren nach Anspruch 1 dadurch gekennzeichnet, daß die Werte der Schneidparamter (P_{L}) für die eigentliche Schneidkontur (7) als Endpunkte für die stetige Änderung und der Weg für diese Änderung zu Beginn des Anschneidens bestimmt werden.

3. Verfahren nach Anspruch 2 dadurch gekennzeichnet, daß die zu Beginn des Anschneidens als Endpunkte bestimmten Werte der Schneidparameter (P_{L}) während der Bewegung der Drahtelektrode längs der Einfahrstrecke (5) wertemäßig beliebig geändert werden können.

4. Verfahren nach einem der vorstehenden Ansprüche, gekennzeichnet durch Schneidparameter (P_{L}), deren wertemäßige Änderung eine minimale Schnittspaltänderung zur Folge hat.

5. Verfahren nach einem der Ansprüche 1-3, dadurch gekennzeichnet, daß die Schneidparameter (P_{L}) durch Generatorwerte, insbesondere Frequenz, Stromstärke, Spannung, Impulsbreite und/oder Spülwerte, insbesondere den Spüldruck und/oder drahtspezifische Werte, insbesondere Drahtcharakteristika, Drahtgeschwindigkeit, bestimmt werden.

6. Verfahren nach einem der vorstehenden Ansprüche, dadurch gekennzeichnet, daß die Drahtelektrode vor dem Anschneiden des Werkstücks (3) eine definierte Anfahrstrecke (2) durchläuft.

7. Verfahren nach Anspruch 6 dadurch gekennzeichnet, daß der Draht den Ort (10) erkennt, an dem er am Werkstück (3) angelangt ist und ab diesem Ort (10) damit beginnt die Werte der reduzierten Schneidparameter (P_{L}) in Richtung der für die eigentliche Schneidkontur (7) vorgesehenen Werte stetig zu ändern.

8. Verfahren nach Anspruch 7 dadurch gekennzeichnet, daß die Erkennung des Ortes (10), ab dem die Drahtelektrode das Werkstück (3) anschneidet insbesondere über die Spannung, den Strom, die Spülbedingungen oder optisch erfolgt.

9. Verfahren nach einem der vorstehenden Ansprüche, dadurch gekennzeichnet, daß sich die stetige Änderung der Werte der reduzierten Schneidparameter (P_{L}) bei Erreichen der Schneidkonturstrecke fortsetzt, falls die für die eigentliche Schneidkontur (7) vorgesehenen Werte noch nicht erreicht sind.

10. Verfahren nach einem der vorstehenden Ansprüche, dadurch gekennzeichnet, daß bei einem Riß der Drahtelektrode in der Einfahrstrecke (5) die Drahtelektrode zunächst aus dem Werkstück (3) bewegt und dann wieder an den Ort (11) des Drahtelektrodenrisses zurückbewegt wird, um dort bei reduzierten Werten gegenüber den Werten beim Drahtriß die Resteinfahrstrecke zurückzulegen.

11. Verfahren nach einem der vorstehenden Ansprüche dadurch gekennzeichnet, daß die für die eigentliche Schneidkontur (7) vorgesehenen Werte der Schneidparameter (P_{L}) sowie Werte zur Bestimmung der Einfahrstrecke (5) gespeichert werden.

## Claims

1. Method of cutting into a workpiece (3) in electroerosive cutting by means of a wire electrode, in which at least some of the values for the specific cutting parameters (P_{L}) are reduced along an entry section (5) in the workpiece (3) in relation to the values of the cutting parameters (P_{L}) for the actual cutting contour (7) in such a way that wire breakage is avoided, characterised in that at least some of the reduced values of the cutting parameters (P_{L}) are constantly varied until the values provided for the actual cutting contour (7) are reached.

2. Method according to claim 1, characterised in that the values of the cutting parameters (P_{L}) for the actual cutting contour (7) are determined as end points for the constant variation, and the distance for this variation to the beginning of cutting in.

3. Method according to claim 2, characterised in that the values of the cutting parameters (P_{L}) determined as end points at the beginning of cutting in can be varied as desired with respect to value during movement of the wire electrode along the entry section (5).

4. Method according to any of the preceding claims, characterised by cutting parameters (P_{L}) of which the variation in value results in a minimal variation in cutting gap.

5. Method according to any of claims 1-3, characterised in that the cutting parameters (P_{L}) are determined by generator values, in particular frequency, current intensity, voltage, pulse width and/or flushing values, in particular the flushing pressure and/or wire-specific values, in particular wire characteristics, wire speed.

6. Method according to any of the preceding claims, characterised in that the wire electrode before cutting into the workpiece (3) travels through a predefined initial section (2).

7. Method according to claim 6, characterised in that the wire recognises the location (10) at which it has reached the workpiece (3) and from this location (10) onwards therefore begins to vary constantly the values of the reduced cutting parameters (P_{L}) in the direction of the values provided for the actual cutting contour (7).

8. Method according to claim 7, characterised in that recognition of the location (10) from which the wire electrode cuts into the workpiece (3) takes place in particular by means of the voltage, the current, the flushing conditions or optically.

9. Method according to any of the preceding claims, characterised in that the constant variation of values of the reduced cutting parameters (P_{L}) continues on reaching the cutting contour section in the event that the values provided for the actual cutting contour (7) are not yet reached.

10. Method according to any of the preceding claims, characterised in that in case of breakage of the wire electrode in the entry section (5), the wire electrode is first moved out of the workpiece (3) and then moved back again to the location (11) of the wire electrode breakage, in order there, at reduced values compared with the values during the wire breakage, to cover the remaining entry section.

11. Method according to any of the preceding claims, characterised in that the values of the cutting parameters (P_{L}) provided for the actual cutting contour (7) as well as values for determining the entry section (5) are stored.

## Revendications

1. Procédé pour entamer une pièce (3) avec le coupage par électroérosion au moyen d'un fil-électrode avec lequel au moins une partie des valeurs pour les paramètres de coupage (PL) spécifiques le long d'une section de positionnement (5) dans la pièce (3) sont réduits par rapport aux valeurs des paramètres de coupage (PL) pour le profil de coupage (7) proprement dit (7) de façon a éviter une rupture du fil, caractérisé en ce que au moins une partie des valeurs réduites des paramètres de coupage (PL) est modifiée constamment jusqu'à ce que les valeurs prévues pour le profil de coupage (7) proprement dit soient atteintes.

2. Procédé selon la revendication 1 caractérisé en ce que les valeurs des paramètres (PL) pour le profil de coupage (7) proprement dit soient définies comme points d'extrémité pour la variation constante et le cheminement pour obtenir cette modification au début de l'entamage.

3. Procédé selon la revendication 2, caractérisé en ce que les valeurs des paramètres de coupage (PL) définies au début de l'entamage comme points d'extrémité Puissent être modifiées à volonté pendant le déplacement du fil-électrode le long de la section de positionnement (5).

4. Procédé selon l'une des revendications susmentionnées, caractérisé par des paramètres de coupage (PL) dont la modification des valeurs entraîne une modification minimale de la fente de coupage.

5. Procédé selon l'une des revendications 1-3, caractérisé en ce que les paramètres de coupage (PL) sont déterminés par les valeurs du générateur, notamment la fréquence, l'intensité du courant, la tension, la largeur d'impulsion et/ou les valeurs de balayage, en particulier la pression de balayage et/ou les valeurs spécifiques du fil, notamment les caractéristiques du fil, la vitesse du fil,

6. Procédé selon l'une des revendications susmentionnées, caractérisé en ce que le fil-électrode parcourt une section de démarrage (2) définie avant l'entamage de la pièce (3).

7. Procédé selon la revendication 6, caractérisé en ce que le fil reconnaît l'endroit (10) où il est arrivé sur la pièce (3) et commence donc à partir de cet endroit à modifier constamment les valeurs des paramètres de coupage (PL) réduits dans le sens des valeurs prévues pour le profil de coupage (7) proprement dit.

8. Procédé selon la revendication 7, caractérisé en ce que la reconnaissance de l'endroit (10) à partir duquel le fil-électrode entame la pièce (3) s'effectue notamment par l'intermédiaire de la tension, du courant, des conditions de balayage ou par voie optique.

9. Procédé selon l'une des revendications susmentionnées, caractérisé en ce que la variation constante des valeurs des paramètres de coupage (PL) réduits se poursuit quand on a atteint la section de profil de coupage dans le cas où les valeurs prévues pour le profil de coupage (7) proprement dit ne sont pas encore atteintes.

10. Procédé selon l'une des revendications susmentionnées, caractérisé en ce que, lors d'une rupture du fil-électrode dans la section de positionnement (5), le fil-électrode commence par sortir de la pièce (3) puis revient en arrière a l'endroit (11) de la rupture du fil-électrode afin de parcourir la section résiduelle de positionnement en cas de valeurs réduites par rapport aux valeurs lors de la rupture du fil.

11. Procédé selon l'une des revendications susmentionnées, caractérisé en ce que les valeurs des paramètres de coupage (PL) prévues pour le profil de coupage (7) proprement dit et des valeurs pour la détermination de la section de positionnement (5) sont stockées.
